# EUROPÄISCHE PATENTSCHRIFT

(11) **EP 1 767 791 B1**
(45) Veröffentlichungstag und Bekanntmachung des Hinweises auf die Patenterteilung: **23.07.2008**
(21) Anmeldenummer: 06120513.4
(22) Anmeldetag: 12.09.2006
(51) Int. Cl.: F16B 2/06, E04C 2/42

(54) **Halteelement für Gitter**
Clamping device for gratings
Dispositif de serrage pour de grilles

(30) Priorität: 21.09.2005 DE 102005000121
(43) Veröffentlichungstag der Anmeldung: 28.03.2007
(73) Patentinhaber: HILTI Aktiengesellschaft, 9494 Schaan (LI)
(72) Erfinder: Foser, Thomas, 9496, Balzers (LI)
(74) Vertreter: Wildi, Roland

(56) Entgegenhaltungen:
- US-A- 2 144 140
- US-A- 3 276 800
- US-A- 4 728 235
- US-A- 4 802 422
- US-A- 5 827 026

## Beschreibung

Die vorliegende Erfindung betrifft ein Halteelement für Gitter, der im Oberbegriff des Patentanspruchs 1 genannten Art.

Aus der US 5 118 147 ist ein Halteelement für Gitterroste bekannt, bei dem ein hakenförmiges erstes Ende an einem Träger angreift während an dessen dem hakenförmigen Ende abgewandten zweiten Ende eine Eingriffsstelle für eine Schraube angeordnet ist. Über die Schraube wird das Halteelement mit einem tellerförmigen Element verbunden, welches auf einem Gitterrost aufliegt, der durch Verspannen mit dem Halteelement an dem Träger festgelegt wird.

Von Nachteil hierbei ist, dass das Haltelement nicht ohne das Tellerelement als Gegenlager zu verwenden ist.

Aus der EP 0 923 675 B1 ist ein U-förmiges Niederhalteelement für ein Metallgitter bekannt, bei dem zwei gegenüberliegende Schenkel von einem Verbindungssteg abragen. Das dem Verbindungssteg abgewandte Ende des zweiten Schenkels ist in Richtung von dem ersten Schenkel weg geneigt, während das dem Verbindungssteg abgewandte Ende des ersten Schenkels zum zweiten Schenkel hin geneigt ist. Zur Schaffung eines Drehpunktes bei der Montage des Niederhalteelementes ist an diesem wenigstens ein dem zweiten Schenkel zugewandter Vorsprung nahe dem umgebogenen Ende des ersten Schenkels angeordnet. Der Vorsprung gelangt bei der Montage des Niederhalteelementes in Eingriff mit einer Kante eines Querstreifens einer der Zellen des Metallgitters.

Von Nachteil bei diesem Niederhalteelement ist, dass es leicht wieder von einem Gitterrost entfernt werden kann, so dass das Gitterrost leicht von unbefugter Seite manipuliert und ggf. wieder von einem Träger oder Untergrund entfernt werden kann.

Aus der US 3 276 800 ist ein Feder-Clip zur Installation von Ringen an Trägern bekannt, der ein U-förmiges Teil aus flachem Federmaterial aufweist. An einem ersten Schenkel des Feder-Clips ist eine Öffnung vorgesehen die einem mit einem Innengewinde versehenen Kragen am anderen Schenkel gegenüber liegt. Über eine durch die Öffnung hindurch geführte und in das Gewinde eingeschraubte Schraube können beide Schenkel gegeneinander verspannt werden.

Aus der US 2 144 140 ist ferner eine Klemmvorrichtung bekannt, die einen U-förmig gebogenen Streifen aus Federmetall aufweist der zwei sich gegenüberliegende Klemmbacken ausbildet. Die Klemmbacken sind dabei über eine Schraube aufeinander zu bewegbar. Die eine Klemmbacke weist dazu eine einfache Öffnung und die andere Klemmbacke eine mit einem Innengewinde versehene Öffnung auf. Die Klemmbacke mit der einfachen Öffnung ist länger als die gegenüberliegende Klemmbacke und weist zudem noch an ihren Längskanten eine Zahnung auf, die zur gegenüberliegenden Klemmbacke hin ausgerichtet ist.

Die Aufgabe der vorliegenden Erfindung liegt darin, ein Halteelement bereitzustellen, das die vorgenannten Nachteile vermeidet, das einfach montiert werden kann und das gute Haltewerte erzielt. Dieses wird erfindungsgemäss durch die in Anspruch 1 genannten Massnahmen erreicht.

Demnach ist am ersten Schenkel ein Durchbruch zur Durchführung eines Schraubmittels angeordnet, während am zweiten Schenkel ein Gegengewinde für ein Gewinde des Schraubmittels und zum ersten Schenkel hin ausgerichtete Festhaltemittel zum Fixieren des Halteelements an einem Träger angeordnet sind. Hierdurch kann ein Gitter über das Halteelement und ein Schraubmittel sicher und auf einfache Weise an einem Träger festgelegt werden, wobei das oder jedes Festhaltemittel an dem Träger angreifen. Die Einteiligkeit des Halteelements bleibt dabei erhalten. Ein zusätzliches Teil, wie z. B. ein tellerförmiges Element, wird nicht mehr benötigt.

An dem ersten Schenkel ist an einem dem Verbindungssteg abgewandten zweiten Bereich, ein seitlich abragender Flächenabschnitt angeordnet ist. Dieser Flächenabschnitt ermöglicht ein Aufliegen und Abstützen des ersten Schenkels auch auf wenigstens einer Längsstrebe des Gitters, wodurch die Qualität der Gitterbefestigung deutlich erhöht wird.

Von Vorteil ist es, wenn der zweite Schenkel einen kurzen Hebelarm, der zwischen dem Gegengewinde und einem am Übergang zum Verbindungssteg ausgebildeten Biegegelenk liegt, und einen langen Hebelarm, der zwischen dem Biegegelenk und dem Festhaltemittel liegt, ausbildet. Durch diese Hebelübersetzung kann das Ende des langen Hebelarmes, der die Festhaltemittel trägt, bei einem Anziehen des Schraubmittels schneller in Richtung auf den ersten Schenkel bewegt werden als der Bereich, der das Gegengewinde trägt.

Vorteilhaft ausgewogene Übersetzungsverhältnisse werden erzielt, wenn der lange Hebelarm 1,5 bis 5 mal länger ist, als der kurze Hebelarm.

Günstig ist es auch, wenn der Durchbruch in einer Vertiefung angeordnet ist. Hierdurch kann der Schraubenkopf relativ zur Oberfläche des Gitters versenkt werden. Ferner ist es von Vorteil, wenn der Durchbruch als Langloch ausgebildet ist, so dass das Schraubmittel mit grossem Spiel positionierbar ist.

Vorteilhaft ist der erste Schenkel länger als der zweite Schenkel und ragt dadurch über das Ende des zweiten Schenkels hinaus, wodurch das Halteelement den Träger und das Gitter selbstständig gegeneinander verspannt und sich dort verkrallt ohne von diesen abzugleiten bzw. abzurutschen.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: ein erfindungsgemässes Halteelement in perspektivischer Ansicht,
- Fig. 2: das Halteelement in Ansicht von oben in einem an einem Gitterrost und einem Träger festgelegten Zustand,
- Fig. 3: das Halteelement in seitlicher Schnittansicht gemäss Ebene III - III in Fig. 2 in einem an einem Gitterrost und einem Träger festgelegten Zustand.

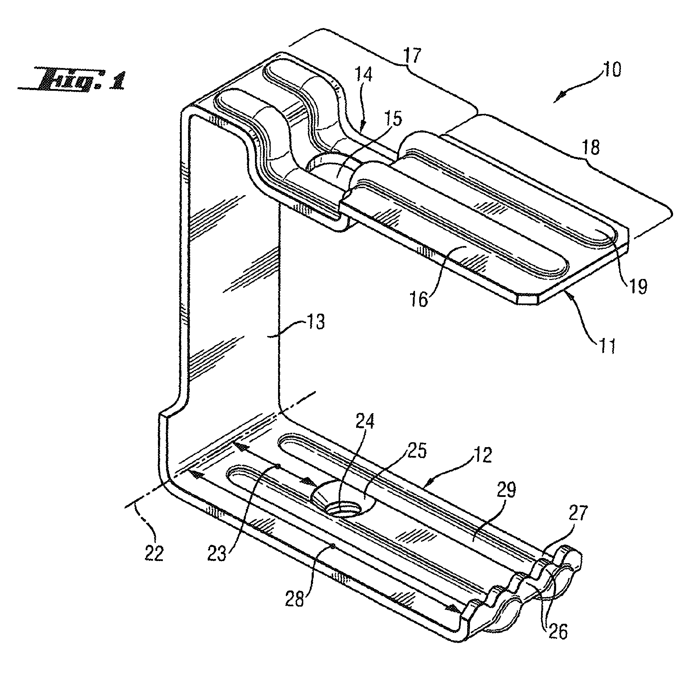

In den Figuren 1 bis 3 ist ein erfindungsgemässes Halteelement 10 zur Befestigung von Gittern 50 bzw. Gitterrosten an Trägern 40 einer Unterkonstruktion in einem Ausführungsbeispiel dargestellt. Das Halteelement 10 ist U-förmig ausgebildet und weist einen ersten Schenkel 11 und einen zweiten Schenkel 12 auf, die beide zur selben Seite von einem Verbindungssteg 13 abragen. Der Übergang von dem Verbindungssteg 13 zum zweiten Schenkel 12 fungiert dabei als Biegegelenk 22. Der erste Schenkel 11 weist an einem dem Verbindungssteg 13 zugewandten ersten Bereich 17 eine Vertiefung 14 mit einem Durchbruch 15 für ein Schraubmittel 30 auf. Ferner weist der erste Schenkel 11 an einem dem Verbindungssteg 13 abgewandten zweiten Bereich 18 einen seitlich abragenden Flächenabschnitt 16 auf. Jeder der Bereiche erstreckt sich dabei über ca. die halbe Länge des ersten Schenkels 11.

Der zweite Schenkel 12 weist ein dem Durchbruch 15 im ersten Schenkel 11 gegenüberliegendes und mit einem Gegengewinde 24 versehenes Loch 25 auf, in welches das Schraubmittel 30 mit seinem Gewinde 31 eingreift. An einem dem Verbindungssteg 13 abgewandten Endbereich 27 weist der zweite Schenkel 12 ferner als Zähne ausgebildete Festhaltemittel 26 auf, die dem ersten Schenkel 11 zugewandt sind.

Der erste Schenkel 11 ist länger als der zweite Schenkel 12 und länger als der Verbindungssteg 13.

Bei der Montage eines derartigen Halteelementes 10 wird dieses zunächst mit seinem zweiten Schenkel 12 und dem Verbindungssteg 13 durch eine Öffnung zwischen zwei Querstreben 51 des Gitters 50 hindurchgeschwenkt (in den Figuren nicht dargestellt), so dass der Endbereich 27 des zweiten Schenkels 12 mit seinen Festhaltemitteln 26 unter einem Träger 40 positioniert ist. Anschliessend wird das Schraubmittel 30 in den Durchbruch 15 eingeführt und mit seinem Gewinde 31 in das Gegengewinde 24 im Loch 25 eingeschraubt. Aufgrund einer Hebelübersetzung am zweiten Schenkel 12 von ca. 1,5/1 bis 5/1 zwischen einem langen Hebelarm 28, der ausgehend vom Biegegelenk 22 bis zum Festhaltemittel 26 geht und einem kurzen Hebelarm 23 der zwischen dem Verbindungssteg 13 und dem Loch 25 liegt, wird das Ende des langen Hebelarmes 28 bei einem Anziehen des Schraubmittels 30 schneller, das heisst mit Spannwegvergrösserung, in Richtung auf den ersten Schenkel 11 bewegt als der Bereich, der das Gegengewinde 24 trägt. Dadurch kann das Festhaltemittel 26 schon durch wenige Umdrehungen des Schraubmittels 30 in kraftschlüssige Anlage mit dem Träger 40 gebracht werden.

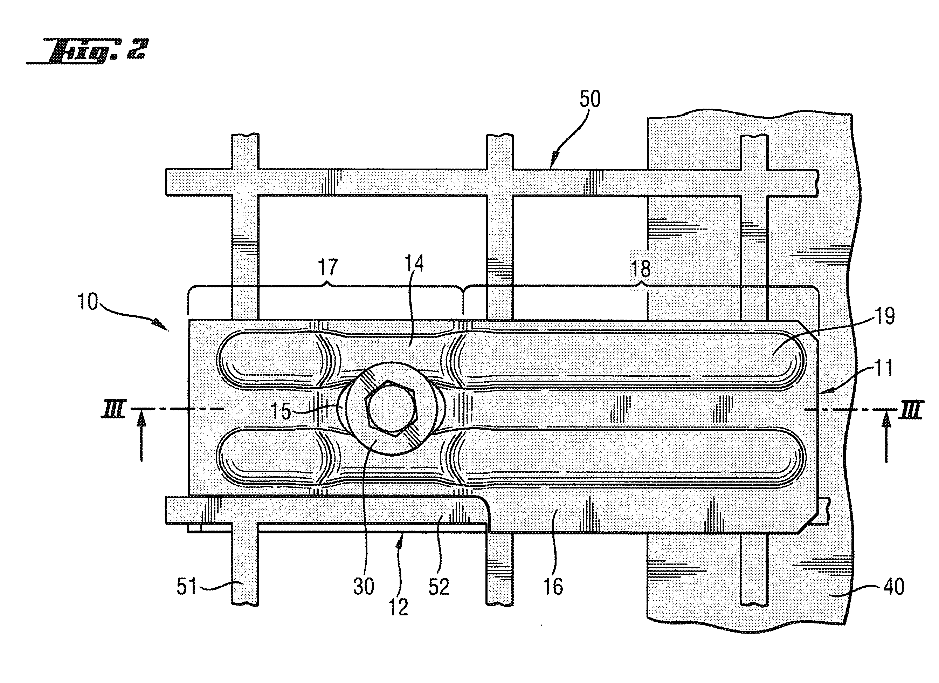

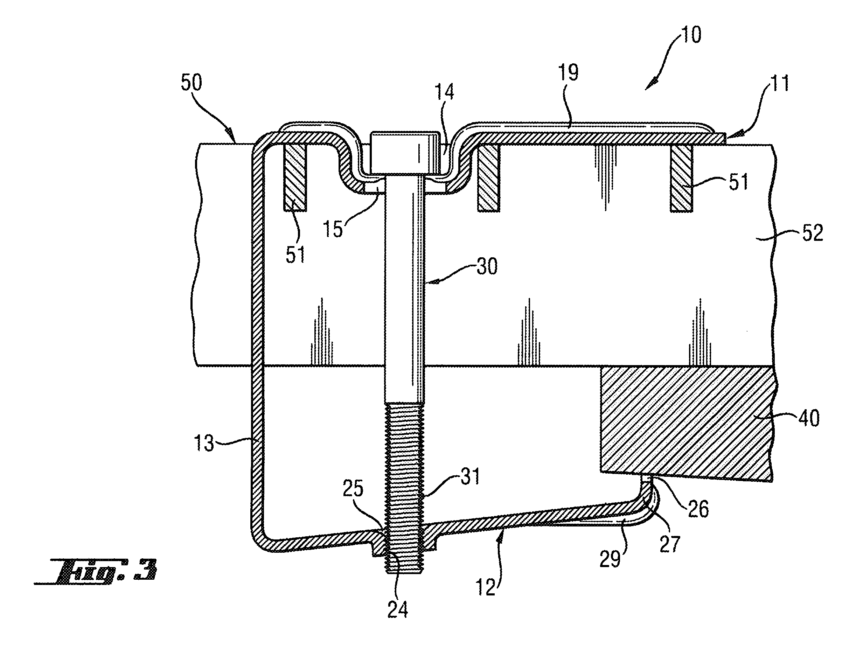

Wie aus den Figuren 2 und 3 ersichtlich ist, liegt der erste Schenkel 11 im montierten Zustand auf Querstreben 51 des Gitters 50 auf, zu denen er im Wesentlichen senkrecht verläuft. Ferner liegt der Flächenabschnitt 16, dadurch dass er seitlich vom zweiten Bereich 18 des ersten Schenkels 11 abragt, auch auf einer Längsstrebe 52 des Gitters 50 auf. Der erste Schenkel 11 ist dadurch sehr gut auf dem Gitter 50 abgestützt. Der zweite Schenkel 12 greift, wie bereits ausgeführt, mit seinen am Endbereich 28 angeordneten Festhaltemitteln 26 an der Unterseite des Trägers 40 an und verkrallt sich dort.

Zur Versteifung des Haltelementes 10 sind an dem ersten Schenkel 11 und an dem zweiten Schenkel 12 Versteifungselemente 19, 29 vorgesehen, die z. B. als Sicken ausgebildet sind.

## Patentansprüche

1. Halteelement zum Befestigen von Gittern (50) an Trägern (40), welches U-förmig ausgebildet ist und einen ersten Schenkel (11) und einen zweiten Schenkel (12) aufweist, die von einem Verbindungssteg (13) abragen, wobei
am ersten Schenkel (11) ein Durchbruch (15) zur Durchführung eines Schraubmittels (30) angeordnet ist, und dass am zweiten Schenkel (12) ein Gegengewinde (24) für ein Gewinde (31) des Schraubmittels (30) und zum ersten Schenkel (11) hin ausgerichtete Festhaltemittel (26) zum Fixieren des Halteelements (10) an einem Träger (40) angeordnet sind, **dadurch gekennzeichnet, dass** an dem ersten Schenkel (11), an einem dem Verbindungssteg (13) abgewandten zweiten Bereich (18), ein seitlich abragender Flächenabschnitt (16) angeordnet ist.

2. Halteelement nach Anspruch 1, **dadurch gekennzeichnet, dass** der zweite Schenkel (12) einen kurzen Hebelarm (23), der zwischen dem Gegengewinde (24) und einem am Übergang zum Verbindungssteg (13) ausgebildeten Biegegelenk (22) liegt, und einen langen Hebelarm (28), der zwischen dem Biegegelenk (22) und dem Festhaltemittel (26) liegt, ausbildet.

3. Halteelement nach Anspruch 2, **dadurch gekennzeichnet, dass** der lange Hebelarm (28) 1,5 bis 5 mal länger ist, als der kurze Hebelarm (23).

4. Halteelement nach einem der Ansprüche 1 bis 3, **dadurch gekennzeichnet, dass** der Durchbruch (15) in einer Vertiefung (14) angeordnet ist.

5. Halteelement nach einem der Ansprüche 1 bis 4, **dadurch gekennzeichnet, dass** der erste Schenkel (11) länger ist als der zweite Schenkel (12).

## Claims

1. Clamping element, for attaching gratings (50) to support means (40), that is U-shaped and has a first armpiece (11) and a second armpiece (12) that extend from the linking crosspiece (13), whereby there is an opening (15), through which a bolting means (30) can be passed, on the first armpiece. (11), and whereby a counter-thread (24) for a thread (31) of the bolting means (30), and retaining means (26) that extend towards the first armpiece (11) and that are present for fixing the clamping element (10), are disposed on a support member (40), **characterized in that** a laterally projecting surface section (16) is disposed, on the first armpiece (11), on a second area (18) that faces away from the linking crosspiece (13).

2. Clamping element in accordance with claim 1, **characterized in that** the second armpiece (12) forms a short lever arm (23), that lies between the counter-thread (24) and a flexible join (22) formed at the point of transition to the linking crosspiece (13), and a long lever arm (28) that lies between the join (22) and the retaining means (26).

3. Clamping element in accordance with claim 2, **characterized in that** the long lever arm (28) is 1.5 to 5 times as long as the short lever arm (23).

4. Clamping element in accordance with one of claims 1 to 3, **characterized in that** the opening (15) is in a recess (14).

5. Clamping element in accordance with one of claims 1 to 4, **characterized in that** the first armpiece (11) is longer than the second armpiece (12).

## Revendications

1. Élément de retenue pour fixer des grilles (50) à des éléments porteurs (40), lequel est conformé en U et comporte une première branche (11) et une seconde branche (12), lesquelles partent d'une barrette de liaison (13), la première branche (11) comportant un passage (15) pour insérer un moyen de vissage (30) et la seconde branche (12) comportant un contre-filetage (24), pour un filetage (31) du moyen de vissage (30), et des moyens d'accrochage (26) orientés vers la première branche (11) pour immobiliser l'élément de retenue (10) contre un élément porteur (40), **caractérisé en ce qu'**une portion de surface en saillie latérale (16) est disposée sur la première branche (11) dans une deuxième zone (18) située à l'opposé de la barrette de liaison (13).

2. Élément de retenue selon la revendication 1, **caractérisé en ce que** la seconde branche (12) forme un bras de levier court (23), situé entre le contre-filetage (24) et l'articulation de flexion (22) ménagée au niveau de la transition avec la barrette de liaison (13), et un bras de levier long (28) situé entre l'articulation de flexion (22) et le moyen d'accrochage (26).

3. Élément de retenue selon la revendication 2, **caractérisé en ce que** le bras de levier long (28) est 1,5 à 5 fois plus long que le bras de levier court (23) .

4. Élément de retenue selon une des revendications 1 à 3, **caractérisé en ce que** le passage (15) est disposé dans un renfoncement (14).

5. Élément de retenue selon une des revendications 1 à 4, **caractérisé en ce que** la première branche (11) est plus longue que la seconde branche (12).
